# FASCICULE DE BREVET EUROPEEN

(11) **EP 2 237 710 B1**
(45) Date de publication et mention de la délivrance du brevet: **06.07.2011**
(21) Numéro de dépôt: 08872718.5
(22) Date de dépôt: 19.12.2008
(51) Int. Cl.: A47J 43/044, A47J 27/21, A47J 43/07, A47J 43/04, A47J 27/00

(54) **RECIPIENT CHAUFFANT POUR UN APPAREIL ELECTROMENAGER DE PREPARATION D'ALIMENTS ET/OU DE BOISSONS**
ERWÄRMUNGSBEHÄLTER FÜR EIN HAUSHALTSGERÄT FÜR DIE ZUBEREITUNG VON SPEISEN UND/ODER GETRÄNKEN
HEATING CONTAINER FOR DOMESTIC APPLIANCE FOR PREPARING FOOD AND/OR BEVERAGES

(30) Priorité: 21.12.2007 FR 0709077
(43) Date de publication de la demande: 13.10.2010
(73) Titulaire: SEB S.A., 69130 Ecully (FR)
(72) Inventeur: GARRIGUES, Patrick, F-65260 Pierrefitte-Nestalas (FR); TOMPA, Carole, F-65000 Tarbes (FR)
(74) Mandataire: Cémeli, Eric Philippe Laurent
(86) Numéro de dépôt international: PCT/FR2008/001801
(87) Numéro de publication internationale: WO 2009/103903

(56) Documents cités:
- EP-A- 0 869 699
- EP-A- 1 683 451
- EP-A- 1 859 717
- WO-A-01/78457
- FR-A- 2 737 380
- GB-A- 2 363 055

## Description

La présente invention concerne le domaine technique des appareils électroménagers de préparation d'aliments et/ou de boissons comportant un récipient associé à des moyens de chauffe.

La présente invention concerne plus particulièrement un récipient chauffant pour un appareil du type précité.

La présente invention concerne également un appareil électroménager de préparation d'aliments et/ou de boissons comportant un récipient chauffant.

Il est connu des documents US 3 220 450, DE 2 020 437, DE 3 507 276, DE 4 414 821, EP 0 963 726, EP 1 647 217, EP 1 733 664 de réaliser des appareils électroménagers de préparation d'aliments et/ou de boissons comportant un récipient associé à un siège chauffant ou à un socle chauffant. Une telle construction comporte l'inconvénient de présenter une inertie thermique importante, peu propice au pilotage précis de la température des aliments contenus dans le récipient.

Il est connu des documents EP 0 432 625, US 6 318 247, US 2005 045671, CN 1 586 378 de réaliser des appareils électroménagers de préparation d'aliments et/ou de boissons comportant un récipient présentant des moyens de chauffe de type élément chauffant blindé. De tels moyens de chauffe bien que solidaires du fond du récipient rendent difficiles la réalisation d'une chauffe précise et homogène.

Il est connu du document EP 1 733 664 de réaliser des appareils électroménagers de préparation d'aliments et/ou de boissons comportant des moyens de chauffe plongeant dans un récipient. Une telle construction comporte l'inconvénient de présenter des risques de surchauffe pour les aliments et/ou les boissons préparées, ainsi que des risques de brûlure pour l'utilisateur.

Il est connu du document DE 1 02 26940 de réaliser un appareil électroménager de préparation d'aliments et/ou de boissons comportant un récipient chauffant comprenant une cuve en acier inoxydable et un fond chauffant rapporté à l'intérieur de la cuve. Le fond chauffant présente des moyens de chauffe de type élément chauffant sérigraphié portés par une plaque en acier inoxydable, la périphérie de ladite plaque étant soudée à l'intérieur de la paroi latérale de la cuve. Une chambre annulaire est ménagée sous le fond chauffant, logeant des éléments de connectique. Une telle construction permet d'envisager la réalisation d'un récipient chauffant susceptible de passer au lave-vaisselle. Toutefois une telle construction s'avère particulièrement délicate à réaliser, notamment du fait de la soudure annulaire.

Un récipient chauffant selon le préambule de la revendication 1 est connu du document WO01/78457.

Un but de la présente invention est de proposer un récipient chauffant d'appareil électroménager de préparation d'aliments et/ou de boissons présentant une construction plus simple à réaliser.

Un autre but de la présente invention est de proposer un récipient chauffant d'appareil électroménager de préparation d'aliments et/ou de boissons présentant un diamètre important.

Un autre but de la présente invention est de proposer un récipient chauffant d'appareil électroménager de préparation d'aliments et/ou de boissons présentant une bonne résistance structurelle.

Un autre but de la présente invention est de proposer un récipient chauffant d'appareil électroménager de préparation d'aliments et/ou de boissons dans lequel les parties chauffantes sont protégées de manière étanche.

Un autre but de la présente invention est de proposer un récipient chauffant d'appareil électroménager de préparation d'aliments et/ou de boissons pour lequel le nettoyage est facilité.

Un autre but de la présente invention est de proposer un récipient chauffant d'appareil électroménager de préparation d'aliments et/ou de boissons apte au passage au lave vaisselle.

Un autre but de la présente invention est de proposer un récipient chauffant d'appareil électroménager de préparation d'aliments et/ou de boissons dans lequel la résistance aux surchauffes est améliorée.

Un autre but de la présente invention est de proposer un récipient chauffant d'appareil électroménager de préparation d'aliments et/ou de boissons présentant une construction favorable à l'obtention d'une gestion de température précise.

Un autre but de la présente invention est de proposer un récipient chauffant d'appareil électroménager de préparation d'aliments et/ou de boissons présentant une construction permettant une chauffe économe en énergie.

Un autre but de la présente invention est de proposer un récipient chauffant d'appareil électroménager de préparation d'aliments et/ou de boissons limitant les risques de brûlure pour l'utilisateur.

Un autre but de la présente invention est de proposer un appareil électroménager de préparation d'aliments et/ou de boissons comportant un récipient chauffant selon les caractéristiques précitées.

Ces buts sont atteints avec un récipient chauffant d'un appareil électroménager de préparation d'aliments et/ou de boissons, comportant une paroi latérale annulaire de récipient et un fond chauffant à élément chauffant sérigraphié, ainsi qu'une partie annulaire entourant le fond chauffant, la partie annulaire étant assemblée avec le fond chauffant, une épaisseur de matériau polymère reliant la partie annulaire au fond chauffant en assurant une liaison mécanique entre la partie annulaire et le fond chauffant, ladite épaisseur de matériau polymère recouvrant l'élément chauffant sérigraphié, du fait que la partie annulaire forme une paroi annulaire inférieure s'étendant en dessous du fond chauffant. Ainsi la partie annulaire s'étend autour du fond chauffant à l'opposé de la paroi latérale annulaire, et forme un réceptacle pour le matériau poloymère utilisé pour recouvrir l'élément chauffant sérigraphié.La construction proposée est simple à réaliser, bien étanche, présente une bonne résistance structurelle, une bonne résistance aux surchauffes grâce à l'effet dissipatif du matériau polymère. Elle favorise l'obtention d'une gestion de température précise, d'une chauffe économe en énergie, limite les risques de brûlure et permet des grands diamètres de récipient.

Ladite épaisseur de matériau polymère assure une liaison mécanique entre la partie annulaire et le fond chauffant et contribue à la solidité mécanique de la partie inférieure du récipient chauffant. La résistance mécanique aux chocs et aux vibrations est ainsi améliorée. Un récipient chauffant de diamètre important, par exemple supérieur à 18 cm, peut ainsi être envisagé. La face libre de l'épaisseur de matériau polymère dépourvue d'aspérités limite la rétention de salissures et facilite le nettoyage du récipient chauffant. L'épaisseur de matériau polymère peut si désiré être déposée en plusieurs couches, sur une couche de protection des pistes résistives de l'élément chauffant sérigraphié, voire directement sur les pistes résistives de l'élément chauffant sérigraphié. La présence de l'épaisseur de matériau polymère sous le fond chauffant contribue à homogénéiser la cartographie des températures et ainsi à limiter les points chauds du fond chauffant. La présence de l'épaisseur de matériau polymère sous le fond chauffant contribue aussi à diminuer la réactivité de l'élément chauffant sérigraphié sans pour autant apporter une inertie thermique importante, ce qui favorise l'obtention d'une bonne précision de température de chauffe. L'épaisseur de matériau polymère permet d'obtenir un effet radiateur. La présence de l'épaisseur de matériau polymère permet également de limiter la température de la face inférieure externe du fond du récipient chauffant, ce qui contribue à protéger l'utilisateur des risques de brûlure en manipulant le récipient chauffant. L'absence de joint élastomère entre le fond chauffant et la partie annulaire permet d'éviter les problèmes d'étanchéité liés à la dilatation du joint élastomère.

Avantageusement alors, ladite épaisseur de matériau polymère enserre la partie inférieure d'un connecteur présentant des plots reliés à l'élément chauffant sérigraphié. Ladite épaisseur de matériau polymère permet un maintien du connecteur. Ladite épaisseur de matériau polymère permet également une isolation diélectrique du fond chauffant. Ladite épaisseur de matériau polymère permet également une protection du fond chauffant contre les agents chimiques, notamment lessiviels. Un passage du récipient chauffant au lave vaisselle peut être envisagé.

Avantageusement encore la partie annulaire s'étend en dessous du fond chauffant. Cette disposition permet de former un réceptacle pour la mise en oeuvre sous forme liquide du matériau polymère. La réalisation du récipient chauffant est ainsi simplifiée.

Avantageusement encore, ladite épaisseur de matériau polymère est supérieure à 0,5 mm. De préférence ladite épaisseur de matériau polymère est atteint 1 mm. Une épaisseur de matériau polymère comprise entre 1 et 3 mm offre un compromis satisfaisant entre propriétés mécaniques et propriétés thermiques.

Avantageusement encore ledit matériau polymère est prévu pour supporter en continu une température supérieure à 130°C. De préférence ledit matériau polymère est prévu pour supporter en continu une température atteignant 150°C. Ces caractéristiques sont bien adaptées à la cuisson en milieu aqueux ou en milieu glucidique. En effet un mélange à base de sucre peut être porté à des températures supérieures à celle d'un mélange principalement aqueux.

Avantageusement alors, ledit matériau polymère comporte de la résine époxy. Ce type de résine permet d'offrir une tenue en température atteignant ou dépassant 150°C.

Avantageusement encore ledit matériau polymère est à base de résine polyuréthanne. Ce type de résine présente une très bonne adhérence sur différents types de matériaux, tel que notamment sur les pistes résistives comportant usuellement un alliage d'argent, sur l'émail protégeant les pistes résistives, sur le verre susceptible d'être utilisé pour le fond chauffant portant les pistes résistives, sur les thermoplastiques utilisés pour la partie annulaire et/ou sur les boîtiers de connectique, par exemple le polypropylène, chargé si désiré, et sur les goujons de connectique. Ce type de résine permet d'assurer une très bonne étanchéité. Ce type de résine s'avère plus économique que la résine époxy, et plus résistant aux chocs car moins rigide. L'ajout de résine époxy dans une base polyuréthanne permet d'augmenter la température maximale supportée en continu et d'atteindre ou de dépasser 150°C, notamment pour des opérations de caramélisation pour lesquelles un niveau température de 160°C est nécessaire.

Avantageusement encore la partie annulaire forme une paroi annulaire supérieure entourant la paroi latérale annulaire de récipient. Cette disposition contribue à améliorer la liaison mécanique entre la partie annulaire et la paroi latérale annulaire de récipient.

Selon une forme de réalisation, la partie annulaire relie le fond chauffant à la paroi latérale annulaire de récipient. Si désiré la paroi latérale annulaire de récipient peut être amovible par rapport à la partie annulaire.

Avantageusement alors la partie annulaire comporte une pièce surmoulée autour du fond chauffant. Cette disposition permet de simplifier la réalisation de la partie annulaire.

Avantageusement encore le fond chauffant comporte une plaque portant l'élément chauffant sérigraphié.

Selon une autre forme de réalisation le fond chauffant et la paroi latérale annulaire de récipient appartiennent à une cuve.

Avantageusement encore le fond chauffant présente des moyens de réception d'un outil de travail rotatif. Le récipient chauffant peut ainsi appartenir à un appareil électroménager de préparation culinaire de type robot culinaire ou mélangeur. En alternative, le récipient chauffant peut notamment appartenir à ou former un appareil électroménager de préparation culinaire de type bouilloire ou mijoteuse, dépourvu d'outil de travail rotatif.

Selon une forme de réalisation, lesdits moyens de réception comportent un élément d'entraînement. L'outil de travail rotatif est alors entraîné par sa partie inférieure.

Avantageusement alors, l'épaisseur de matériau polymère enserre la partie inférieure d'un noyau central logeant au moins partiellement l'élément d'entraînement. Le noyau central peut si désiré être relié à la partie annulaire, par exemple au moyen d'un ou plusieurs bras.

Selon une autre forme de réalisation lesdits moyens de réception comportent un organe de guidage. L'outil de travail rotatif est alors entraîné par sa partie supérieure.

Ces buts sont atteints également avec un appareil électroménager de préparation d'aliments et/ou de boissons comprenant un récipient chauffant selon l'une au moins des caractéristiques précitées.

Avantageusement alors, ledit appareil comprend un outil de travail rotatif disposé dans ledit récipient chauffant, et un boîtier comportant des moyens d'entraînement de l'outil de travail rotatif.

L'invention sera mieux comprise à l'étude de trois exemples de réalisation, pris à titre nullement limitatif, illustrés dans les figures annexées, dans lesquelles :
- la figure 1 est une vue en perspective d'un premier exemple de réalisation d'un appareil électroménager de préparation d'aliments et/ou de boissons comprenant un récipient chauffant selon l'invention, comportant un dispositif chauffant,
- la figure 2 est une vue en perspective et en éclaté du récipient chauffant illustré sur la figure 1, montrant mieux le dispositif chauffant,
- la figure 3 est une vue en perspective d'un fond chauffant appartenant au dispositif chauffant illustré sur les figures 1 et 2,
- la figure 4 est une vue du dispositif chauffant illustré sur les figures 1 et 2 après surmoulage d'une partie annulaire et d'un noyau central sur le fond chauffant illustré sur la figure 3,
- la figure 5 est une vue du dispositif chauffant illustré sur les figures 1 et 2, après ajout d'un connecteur sur le fond chauffant tel qu'illustré sur la figure 4,
- la figure 6 est une vue du dispositif chauffant illustré sur les figures 1 et 2, après ajout de matériau polymère pour recouvrir le fond chauffant tel qu'illustré sur la figure 5,
- la figure 7 est une vue en perspective d'un élément de récipient adapté pour une utilisation avec le dispositif chauffant illustré sur la figure 6,
- la figure 8 est une vue en coupe de l'élément de récipient illustré sur la figure 7, assemblé avec le dispositif chauffant illustré sur la figure 6,
- la figure 9 est une vue en perspective et en éclaté d'un deuxième exemple de réalisation d'un appareil électroménager de préparation d'aliments et/ou de boissons comprenant un récipient chauffant selon l'invention, comportant un dispositif chauffant,
- la figure 10 est une vue en coupe du récipient chauffant illustré sur la figure 9, montrant mieux le dispositif chauffant,
- la figure 11 est une vue partielle d'un troisième exemple de réalisation d'un récipient chauffant selon l'invention,
- la figure 12 est une vue de l'embase du récipient chauffant illustré sur la figure 11.

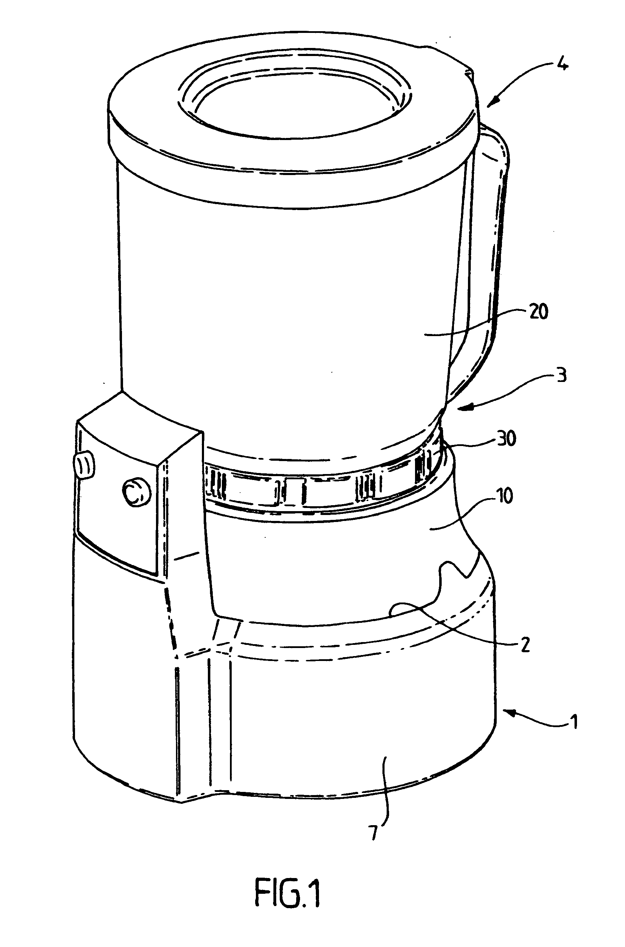

L'appareil électroménager de préparation d'aliments et/ou de boissons illustré sur la figure 1 comporte une base 1 formant un socle 2 recevant un récipient chauffant 3. Le récipient chauffant 3 est associé à un couvercle 4.

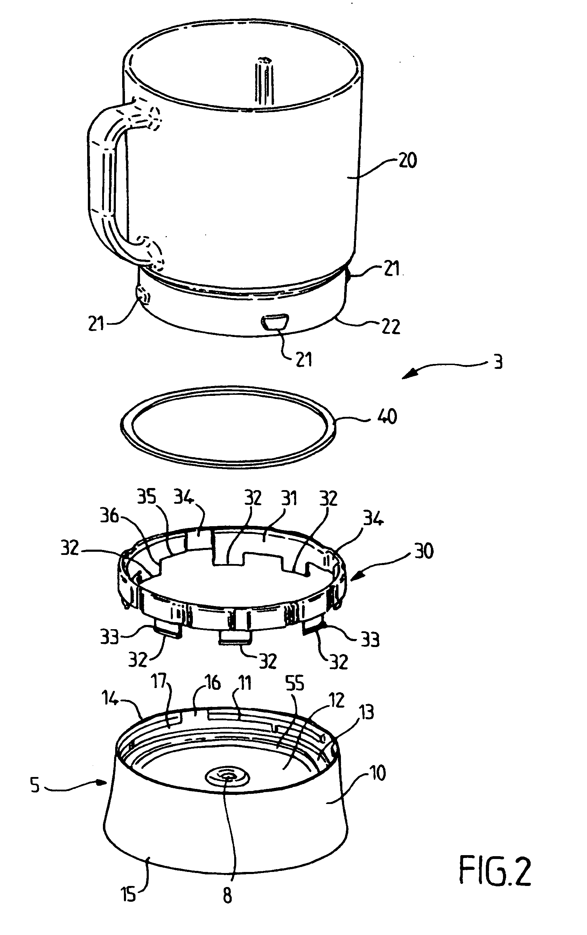

La figure 2 illustre le récipient chauffant 3 montré sur la figure 1. Le récipient chauffant 3 comporte une embase 10 et une paroi latérale annulaire 20 de récipient montée amovible sur l'embase 10. L'embase 10 comporte une partie annulaire 11 entourant un fond chauffant 12. La partie annulaire 11 relie le fond chauffant 12 à la paroi latérale annulaire 20 de récipient. La partie annulaire 11 est assemblée avec le fond chauffant 12. L'embase 10 peut comporter un outil de travail rotatif, non représenté sur la figure 2. A cet effet le fond chauffant 12 présente une ouverture axiale 8.

La partie annulaire 11 comporte une collerette annulaire interne 13. Le fond chauffant 12 est relié à la collerette annulaire interne 13.

La partie annulaire 11 s'étend au dessus du fond chauffant 12. La partie annulaire 11 forme une paroi annulaire supérieure 14 s'élevant à partir du fond chauffant 12. La paroi annulaire supérieure 14 est périphérique.

La partie annulaire 11 s'étend aussi en dessous du fond chauffant 12. La partie annulaire 11 forme une paroi annulaire inférieure 15 s'étendant en dessous du fond chauffant 12. La paroi annulaire inférieure 15 est périphérique.

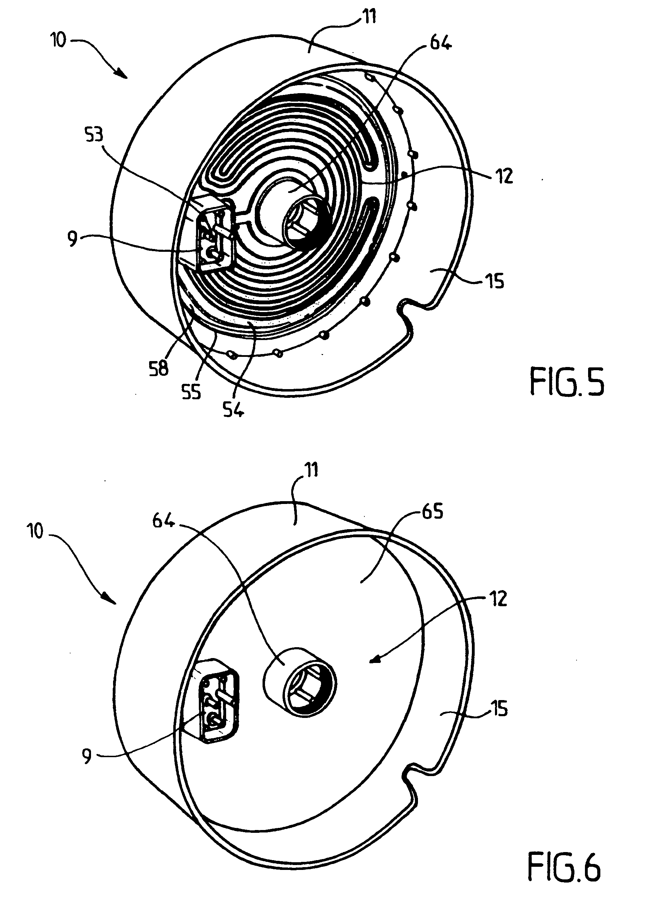

Des moyens de maintien 30 de la paroi latérale annulaire 20 amovible de récipient sont prévus sur la partie annulaire 11. Les moyens de maintien 30 sont prévus pour coopérer avec une face externe de la paroi latérale annulaire 20 amovible de récipient, tel que représenté sur la figure 6.

Les moyens de maintien 30 sont disposés sur la paroi annulaire supérieure 14. Plus particulièrement, les moyens de maintien 30 comportent une couronne de verrouillage 31 à baïonnette montée mobile par rapport à la paroi annulaire supérieure 14. A cet effet la couronne de verrouillage 31 comporte des pattes inférieures 32 munies de crochets externes 33 et la partie annulaire 11 présente des encoches longitudinales internes 16 débouchant dans une portion de rainure périphérique interne 17 de la paroi annulaire supérieure 14. La couronne de verrouillage 31 comporte des rainures longitudinales internes 34 débouchant entre deux pattes inférieures 32 à distance de l'une desdites pattes inférieures. Ainsi un bord inférieur 35 de la couronne de verrouillage 31 adjacent à l'une des rainures longitudinales internes 34 forme un moyen de retenue pour un ergot 21 ménagé sur la face externe de la partie inférieure de la paroi latérale annulaire 20 amovible de récipient. Une face latérale 36 de la patte inférieure adjacente audit bord inférieur 35 forme une butée latérale de verrouillage pour ledit ergot 21. La paroi latérale annulaire 20 comporte avantageusement au moins trois ergots 21, et de préférence quatre ergots 21, tel que représenté sur la figure 2.

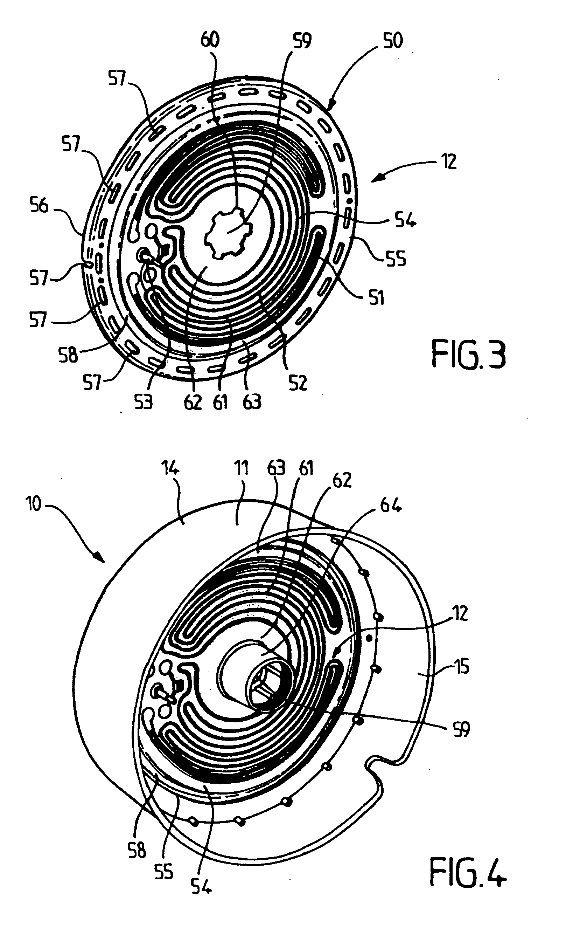

La partie annulaire 11 est avantageusement réalisée en matière plastique. Selon un mode de réalisation préféré illustré sur les figures 3 à 6 et 9, la partie annulaire 11 comporte une pièce surmoulée autour du fond chauffant 12.

Tel que mieux visible sur les figures 3 à 6, le fond chauffant 12 comporte une plaque 50 associée à des moyens de chauffe 51. Selon la forme de réalisation préférée visible sur les figures 3 à 5, les moyens de chauffe 51 sont formés par un élément chauffant sérigraphié 52 disposé sous la plaque 50.

Une ou plusieurs couches d'isolant diélectrique peuvent être déposées entre la plaque 50 et les pistes conductrices de l'élément chauffant sérigraphié 52 et/ou sur les pistes conductrices de l'élément chauffant sérigraphié 52.

Selon la forme de réalisation préférée visible sur les figures 3 à 5, la plaque 50 est avantageusement réalisée en acier inoxydable, par exemple en acier inoxydable de type F17, 403 ou 430.

La figure 3 illustre le fond chauffant 12 formé par la plaque 50 portant l'élément chauffant sérigraphié 52. L'élément chauffant sérigraphié 52 est réalisé sur la face inférieure de la plaque 50. La plaque 50 forme un disque. L'épaisseur de la plaque 50 est par exemple de 1,2 mm, pour faciliter la soudure d'un goujon de masse 53.

Le fond chauffant 12 présente une partie centrale 54 portant les moyens de chauffe 51 formés par l'élément chauffant sérigraphié 52. Le fond chauffant 12 présente une partie périphérique 55 comportant avantageusement un bord 56 relevé ainsi que des découpes 57. Le bord 56 relevé permet d'améliorer la rigidité dudit fond chauffant 12. Les découpes 57 permettent de faciliter l'accrochage de la partie annulaire 11 sur la partie périphérique 55. La plaque 50 présente avantageusement une zone emboutie 58 entre la partie centrale 54 et la partie périphérique 55 du fond chauffant 12. Les pistes résistives de l'élément chauffant sérigraphié 52 sont entourées par la zone emboutie 58 et s'étendent avantageusement à une distance d'au moins 3 mm de la zone emboutie 58.

Un passage central 59 est ménagé dans la plaque 50. Le passage central 59 peut présenter avantageusement des encoches 60 tel que visibles sur la figure 3 et/ou un bord relevé. Si désiré les encoches peuvent être relevées ou non. Le bord relevé peut être continu ou non. Les pistes résistives de l'élément chauffant sérigraphié 52 entourent le passage central 59.

Les pistes résistives de élément chauffant sérigraphié 52 sont ménagées sur une zone annulaire intermédiaire 61 du fond chauffant 12. La zone annulaire intermédiaire 61 entoure une zone centrale 62 du fond chauffant 12 dépourvue de pistes résistives. La zone annulaire intermédiaire 61 est entourée par une zone périphérique 63 du fond chauffant 12 également dépourvue de pistes résistives. La zone annulaire intermédiaire 61 et la zone centrale 62 sont ménagées sur la partie centrale 54 du fond chauffant 12. La zone périphérique 63 s'étend sur la périphérie de la partie centrale 54 ainsi que sur la zone emboutie 58 et sur la partie périphérique 55.

La figure 4 illustre l'embase 10 après surmoulage de la partie annulaire 11 autour du fond chauffant 12. La partie annulaire 11 est assemblée avec la partie périphérique 55 du fond chauffant 12. La partie annulaire 11 est réalisée en matériau(x) adapté(s) aux températures atteintes par la partie périphérique 55 du fond chauffant 12. La partie annulaire 11 peut par exemple être réalisée en polypropylène chargé verre, notamment pour les moyens de chauffe 51 présentant une puissance de l'ordre de 1000 W associés à la plaque 50 réalisée en acier inoxydable. La partie annulaire 11 peut aussi être réalisée en PBT, notamment pour des moyens de chauffe 51 présentant plus élevée, jusqu'à 3000 W, associés à la plaque 50 réalisée en acier inoxydable. La partie annulaire 11 de l'embase 10 est surmoulée autour de la partie centrale 54 du fond chauffant 12.

Plus particulièrement, la partie annulaire 11 est surmoulée sur la partie périphérique 55 autour de la zone emboutie 58. Ainsi la partie annulaire 11 est solidarisée de manière annulaire avec la partie périphérique 55 du fond chauffant 12. La zone périphérique 63 forme un frein thermique entre les moyens de chauffe 51 et la partie annulaire 11.

Les moyens de maintien 30 sont ménagés à l'intérieur de la paroi annulaire supérieure 14 de la partie annulaire 11, tel que visible sur la figure 2. La partie annulaire 11 forme un frein thermique annulaire réalisé en matériau non métallique entre les moyens de maintien 30 et la partie périphérique 55 du fond chauffant 12 et permet ainsi d'éviter la dispersion des calories issues du fond chauffant 12 vers la paroi latérale annulaire 20 amovible de récipient.

Un noyau central 64 est surmoulé dans la zone centrale 62 autour du passage central 59. Les encoches 60 (visibles sur la figure 3) facilitent l'accrochage du noyau central 64 à la partie centrale 54 du fond chauffant 12. La zone centrale 62 forme un frein thermique entre les moyens de chauffe 51 et le noyau central 64.

La figure 5 illustre l'embase 10 après montage d'un connecteur 9 sur la face inférieure du fond chauffant 12. Le connecteur 9 est agencé autour du goujon de masse 53.

Tel que bien visible sur les figures 3 à 5, l'élément chauffant sérigraphié 52 présente avantageusement une épargne au niveau du noyau central 64. En d'autres termes, au niveau du noyau central 64 le fond chauffant 12 est dépourvu de pistes résistives appartenant à l'élément chauffant sérigraphié 52. En effet, en l'absence d'une telle épargne la zone centrale de l'élément chauffant sérigraphié est usuellement l'une des zones les plus chaudes. Les pistes résistives de l'élément chauffant sérigraphié 52 s'étendent avantageusement à une distance d'au moins 3 mm du noyau central 64, par exemple à une distance de 10 mm.

La figure 6 illustre l'embase 10 après ajout de matériau polymère 65 pour recouvrir la face inférieure de la plaque 50 portant l'élément chauffant sérigraphié 52. L'épaisseur de matériau polymère 65 relie la partie annulaire 11 au fond chauffant 12 et recouvre l'élément chauffant sérigraphié 52 visible sur les figures 3 à 5. L'épaisseur de matériau polymère 65 enserre la partie inférieure du connecteur 9 présentant des plots reliés à l'élément chauffant sérigraphié 52. L'épaisseur de matériau polymère 65 enserre la partie inférieure du noyau central 64. L'épaisseur de matériau polymère 65 est supérieure à 0,5 mm et est avantageusement comprise entre 1 et 3 mm. Le matériau polymère 65 est choisi pour supporter en continu les températures atteintes par le fond chauffant 12. Le matériau polymère 65 est avantageusement un matériau polymère thermodurcissable. Les résines polyuréthanne usuelles supportent en continu une température atteignant 130°C. Les résines époxy supportent en continu une température dépassant 130°C, et supportent usuellement en continu une température atteignant ou dépassant 150°C. Les formulations de résine à base de ces matières peuvent permettre d'obtenir une très bonne adhérence avec la partie annulaire 11 et avec le fond chauffant 12. Des formulations de résine à base de ces matières offrent une très bonne mouillabilité. Des formulations de résine à base de ces matières permettent d'obtenir des coefficients de dilatation compatibles avec les coefficients de dilatation de la plaque 50 portant l'élément chauffant sérigraphié 52. Ainsi la cohésion du matériau polymère 65 avec l'élément chauffant sérigraphié 52 et s'avère très bonne. Des formulations de résine à base de ces matières permettent de réaliser des assemblages multi-matériaux étanches et solides. Toutefois les résines époxy s'avèrent plutôt onéreuses. Une formulation de matériau polymère à base de résine polyuréthanne comportant de la résine époxy, de préférence au moins 5% et avantageusement entre 5% et 15% pour obtenir un bon compromis entre souplesse, rigidité et tenue à la température, préférée pour le matériau polymère 65.

Le récipient chauffant 3 illustré sur les figures 1 et 2 comporte la paroi latérale annulaire 20 de récipient et le fond chauffant 12 à élément chauffant sérigraphié 52 ainsi que la partie annulaire 11 entourant ledit fond chauffant 12.

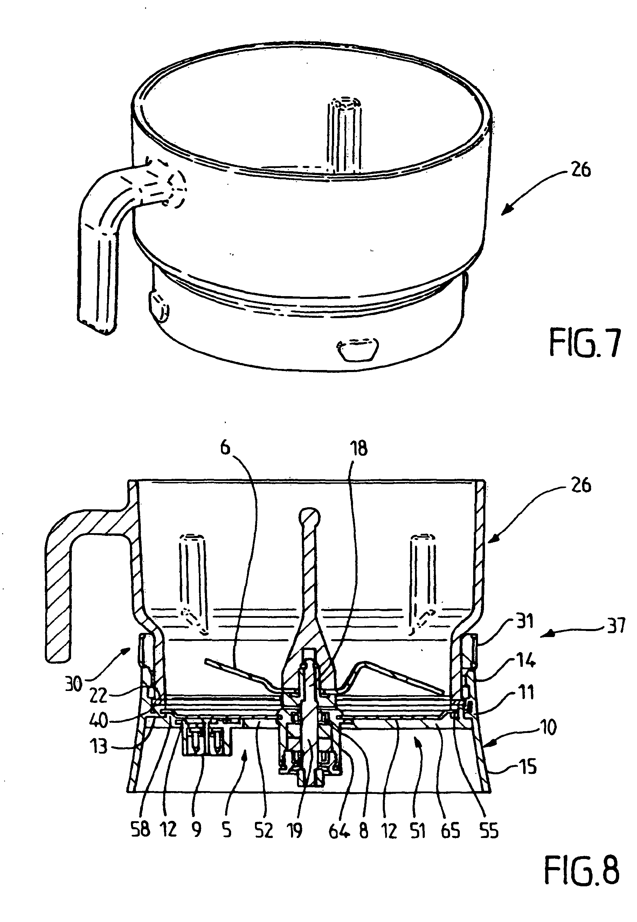

La figure 7 illustre une autre paroi latérale annulaire 26 de récipient susceptible d'être montée sur l'embase 10 à la place de la paroi latérale annulaire 20. Les parois latérales annulaires 20, 26 de récipient sont de géométrie différentes. Les parois latérales annulaires 20, 26 de récipient peuvent aussi être réalisées dans des matières différentes, par exemple en matière plastique, en acier inoxydable, en verre, voire en céramique.

La figure 8 illustre un récipient chauffant 37 d'appareil électroménager de préparation d'aliments et/ou de boissons, comportant l'embase 10 illustrée sur les figures 1 à 6 et la paroi latérale annulaire 26 de récipient illustrée sur la figure 7, montée amovible sur ladite embase 10 au moyen de la couronne de verrouillage 31. La partie annulaire 11 relie le fond chauffant 12 à la paroi latérale annulaire 26 de récipient. La partie annulaire 11 forme une paroi externe du récipient chauffant 37. La paroi latérale annulaire 26 de récipient est montée à l'intérieur de la partie annulaire 11.

Le récipient chauffant 37 illustré sur la figure 8 comporte la paroi latérale annulaire 26 de récipient et le fond chauffant 12 à élément chauffant sérigraphié 52 ainsi que la partie annulaire 11 entourant ledit fond chauffant 12.

Le fond chauffant 12 présente des moyens de réception 18 d'un outil de travail rotatif 6. Les moyens de réception 18 de l'outil de travail rotatif 6 comportent un élément d'entraînement 19. L'élément d'entraînement 19 traverse l'ouverture axiale 8 du fond chauffant 12. L'élément d'entraînement 19 est monté dans le noyau central 64. Ainsi le noyau central 64 loge au moins partiellement l'élément d'entraînement 19. L'outil de travail rotatif 6 peut être fixé à la partie supérieure de l'élément d'entraînement 19 ou au contraire être amovible par rapport à l'élément d'entraînement 19, tel que représenté sur la figure 8.

Selon la réalisation illustrée sur les figures 1, 2 et 8, un joint 40 est interposé entre l'embase 10 et un bord annulaire inférieur 22 de la paroi latérale annulaire 20, 26 amovible de récipient. Le joint 40 repose sur la partie annulaire 11 en périphérie du fond chauffant 12. Le joint 40 est mis en compression entre la partie annulaire 11 et le bord annulaire inférieur 22 de la paroi latérale annulaire 20, 26 amovible de récipient au moyen de la couronne de verrouillage 31. Plus particulièrement, le joint 40 repose sur la collerette annulaire interne 13. En alternative le joint 40 pourrait notamment être surmoulé sur le bord annulaire inférieur 22 de la paroi latérale annulaire 20, 26 amovible de récipient. Le joint 40 est avantageusement disposé à distance des moyens de chauffe 51. A cet effet le joint 40 est disposé en périphérie des pistes conductrices de l'élément chauffant sérigraphié 52.

L'appareil électroménager de préparation d'aliments et/ou de boissons illustré sur la figure 1 peut recevoir un récipient chauffant formé par l'embase 10 et l'une des parois latérales annulaires 20, 26.

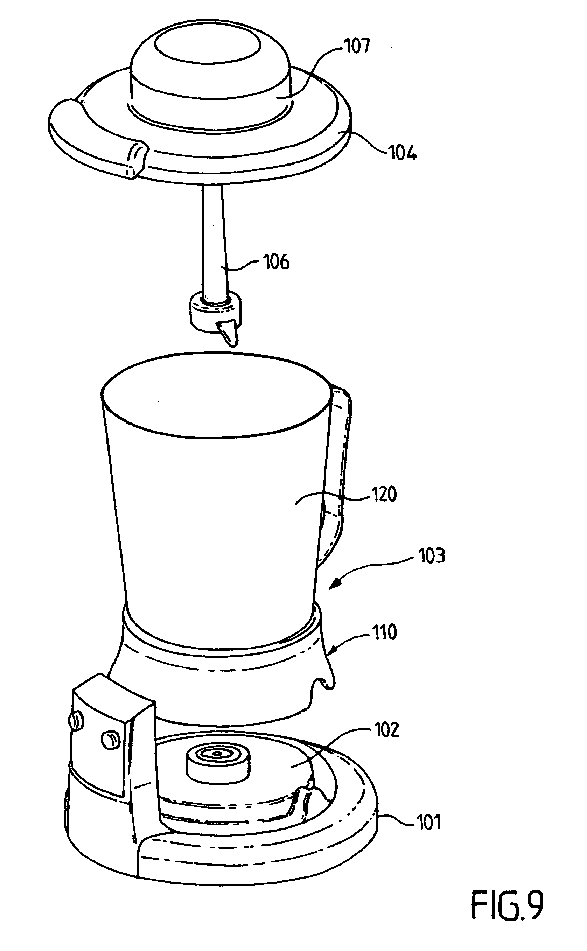

L'appareil électroménager de préparation d'aliments et/ou de boissons recevant le récipient chauffant 37 formé par l'embase 10 et la paroi annulaire 26 représentées sur la figure 9 comporte un outil de travail rotatif 6 disposé dans le récipient chauffant 37, et un boîtier 7 comportant des moyens d'entraînement de l'outil de travail rotatif 6, le boîtier 7 étant formé par la base 1 représentée sur la figure 1.

L'appareil électroménager de préparation d'aliments et/ou de boissons illustré sur la figure 9 comporte une base 101 formant un socle 102 recevant un récipient chauffant 103 associé à un couvercle 104, ainsi qu'un boîtier 107 comportant des moyens d'entraînement d'un outil de travail rotatif 106.

L'appareil électroménager de préparation d'aliments et/ou de boissons illustré sur la figure 9 diffère de l'appareil électroménager de préparation d'aliments et/ou de boissons illustré sur la figure 1 en ce que le boîtier 107 est formé par le couvercle 104.

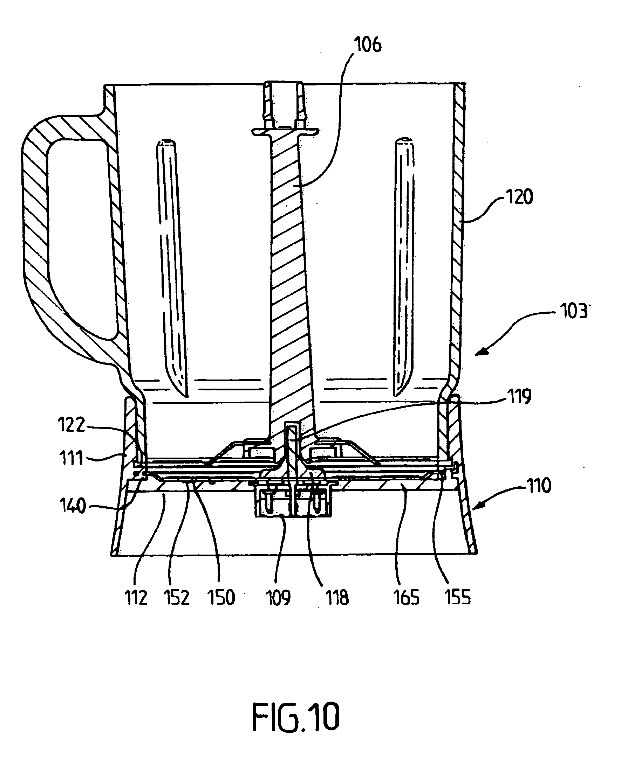

La figure 10 illustre le récipient chauffant 103 montré sur la figure 9, recevant l'outil de travail rotatif 106. Le récipient chauffant 103 présente une embase 110 et une paroi latérale annulaire 120 de récipient montée sur l'embase 110. L'embase 110 comporte une partie annulaire 111 entourant un fond chauffant 112. La partie annulaire 111 forme une paroi externe du récipient chauffant 103. La partie annulaire 111 relie le fond chauffant 112 à la paroi latérale annulaire 120 de récipient. L'embase 110 comporte un connecteur 109 avantageusement agencé en position centrale. Le fond chauffant 112 comporte une plaque 150 portant un élément chauffant sérigraphié 152. La plaque 150 est avantageusement identique à la plaque 50. L'élément chauffant sérigraphié 152 peut aisément présenter des pistes résistives de dessin différent et/ou de puissance différente du dessin et/ou de la puissance des pistes résistives de l'élément chauffant sérigraphié 52. Du matériau polymère 165 recouvre avantageusement la face inférieure du fond chauffant 112. L'épaisseur de matériau polymère 165 est supérieure à 0,5 mm et est avantageusement comprise entre 1 et 3 mm. Le matériau polymère 165 peut être choisi comme le matériau polymère 65. La partie annulaire 111 est assemblée avec la partie périphérique 155 du fond chauffant 112 de manière identique à l'assemblage de la partie annulaire 11 avec le fond chauffant 12 de l'embase 10. L'épaisseur de matériau polymère 65 relie la partie annulaire 111 au fond chauffant 112 et recouvre l'élément chauffant sérigraphié 152. L'épaisseur de matériau polymère 165 enserre la partie inférieure du connecteur 109 présentant des plots reliés à l'élément chauffant sérigraphié 152. La partie annulaire 111 forme un frein thermique annulaire réalisé en matériau non métallique entre la paroi latérale annulaire 120 de récipient et la partie périphérique 155 du fond chauffant 112. La paroi latérale annulaire 120 de récipient est montée à l'intérieur de la partie annulaire 111. Le récipient chauffant 103 comporte la paroi latérale annulaire 120 de récipient et le fond chauffant 112 à élément chauffant sérigraphié 152 ainsi que la partie annulaire 111 entourant ledit fond chauffant 112 et assemblée avec ledit fond chauffant 112.

L'embase 110 est dépourvue d'outil de travail rotatif. Le fond chauffant 112 présente des moyens de réception 118 de l'outil de travail rotatif 106, visibles sur la figure 10. Les moyens de réception 118 de l'outil de travail rotatif 106 comportent un organe de guidage 119. Tel que représenté sur la figure 10, l'organe de guidage 119 est formé par un axe prévu pour recevoir l'outil de travail rotatif 106.

A titre de variante, non représentée aux figures, l'organe de guidage 119 peut être formé par une conformation ménagée sur la face supérieure du fond chauffant 112, cette conformation recevant un élément d'appui de l'outil de travail rotatif. Si désiré, ledit élément d'appui peut être monté rotatif par rapport à la partie principale de l'outil de travail rotatif portant l'organe de travail ; ledit élément d'appui pouvant être immobilisé, notamment en rotation, par rapport à l'embase 110.

La paroi latérale annulaire 120 de récipient est fixée à la partie annulaire 111, par exemple par collage. Un joint 140 est avantageusement interposé entre l'embase 110 et un bord annulaire inférieur 122 de la paroi latérale annulaire 120 de récipient. La position du joint 140 est identique à la position du joint 40. Si désiré le joint 140 peut être surmoulé sur le bord annulaire inférieur 122 de la paroi latérale annulaire 120 de récipient.

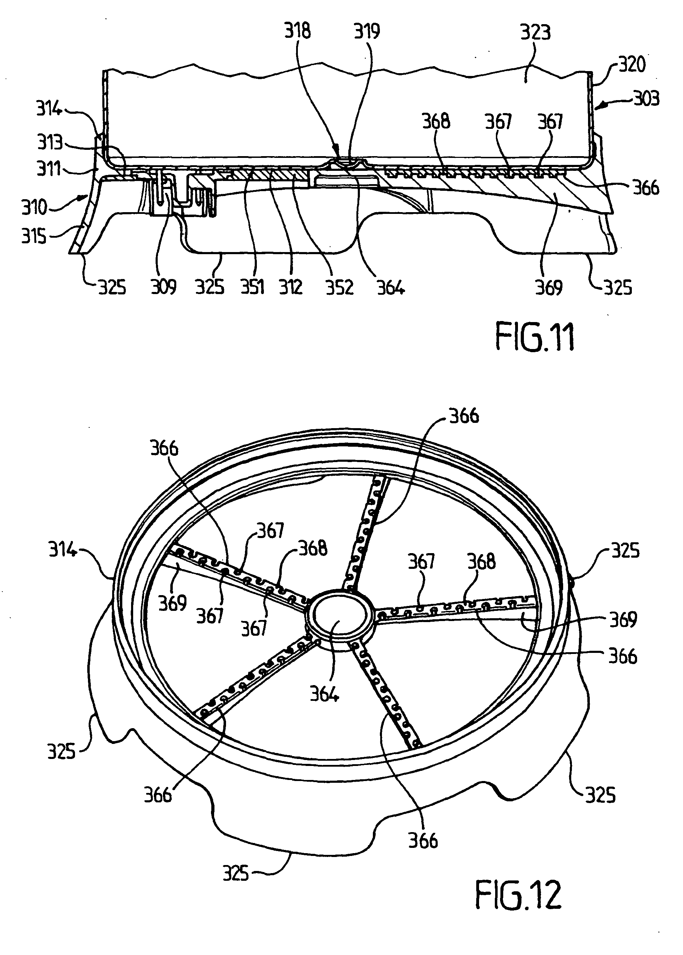

La figure 11 montre la partie inférieure d'un troisième exemple de réalisation d'un récipient chauffant 303 selon l'invention.

Le récipient chauffant 303 comporte une embase 310, un fond chauffant 312 et une paroi latérale annulaire 320 de récipient. Le récipient chauffant 303 diffère des exemples de réalisations précédents en ce que le fond chauffant 312 et la paroi annulaire 320 appartiennent à une cuve 323. Le récipient chauffant 303 comporte des moyens de chauffe 351 formés par un élément chauffant sérigraphié 352 disposé sous la face inférieure de la cuve 323. La cuve 323 est réalisée en acier inoxydable et est avantageusement obtenue par emboutissage. Le récipient chauffant 303 comporte un connecteur 309 relié aux moyens de chauffe 351. L'embase 310 comporte une partie annulaire 311 entourant le fond chauffant 312 du récipient chauffant 303. La partie annulaire 311 comporte une collerette annulaire interne 313. Le fond chauffant 312 est relié à la collerette annulaire interne 313. Toutefois les moyens de chauffe 351 s'étendent à distance de la collerette interne 313, tel qu'exposé pour le premier exemple de réalisation. Le récipient chauffant 303 comporte la paroi latérale annulaire 320 de récipient et le fond chauffant 312 à élément chauffant sérigraphié 352 ainsi que la partie annulaire 311 entourant ledit fond chauffant 312 et assemblée avec ledit fond chauffant 312.

Le récipient chauffant 303 est prévu pour recevoir un outil de travail rotatif, non représentés sur la figure 11. Le fond chauffant 312 présente des moyens de réception 318 de l'outil de travail rotatif. Les moyens de réception 318 de l'outil de travail rotatif comportent un organe de guidage 319. Tel que représenté sur la figure 11, l'organe de guidage 319 est formé par une conformation concave prévu pour recevoir l'extrémité inférieure de l'outil de travail rotatif.

La figure 12 illustre l'embase 310 avant assemblage avec la cuve 323. L'embase 310 comporte une paroi annulaire supérieure 314 prévue pour entourer la partie inférieure de la paroi latérale annulaire 320 de récipient. La paroi annulaire supérieure 314 présente avantageusement un diamètre intérieur très légèrement inférieur au diamètre extérieur de la paroi latérale annulaire 320 de récipient, de manière à assurer un assemblage sans jeu entre la partie annulaire 311 et la cuve 323. L'embase 310 comporte une paroi annulaire inférieure 315 munie de pieds 325. L'embase 310 comporte un noyau central 364 relié à la partie annulaire 311 par des bras 366. Les bras 366 présentent un profil en T. Les bras 366 comportent des cavités 367 ménagés sur une partie supérieure 368 du profil en T. Une partie inférieure 369 du profil en T est reliée à la paroi annulaire inférieure 315, afin de raidir les bras 366.

Les cavités 367 sont prévues pour favoriser l'accrochage de matériau polymère 365 servant à l'assemblage de la cuve 323 et de l'embase 311. Les bras 366 sont agencés à distance du fond chauffant 312 de manière à permettre la présence d'une couche de matériau polymère 365 entre les bras 366 et le fond chauffant 312. Le matériau polymère 365 mis en oeuvre à l'état fluide peut s'insérer dans les cavités 367 pour assurer une bonne cohésion entre les bras 366 et le fond chauffant 312.

Si désiré, l'épaisseur de matériau polymère 365 peut recouvrir complètement la partie supérieure 368 des bras 366. De préférence, l'épaisseur de matériau polymère 365 atteint la partie inférieure 369. L'épaisseur de matériau polymère 365 est supérieure à 0,5 mm et est avantageusement comprise entre 1 et 3 mm. Le matériau polymère 365 peut être choisi comme le matériau polymère 65.

L'épaisseur de matériau polymère 365 relie la partie annulaire 311 au fond chauffant 312 et recouvre l'élément chauffant sérigraphié 352. L'épaisseur de matériau polymère 365 enserre la partie inférieure du connecteur 309 présentant des plots reliés à l'élément chauffant sérigraphié 352.

Si désiré le récipient chauffant 303 peut être utilisé avec un appareil électroménager de préparation d'aliments et/ou de boissons tel qu'illustré sur la figure 9, l'outil de travail rotatif étant adapté aux moyens de réception 118.

A titre de variante complémentaire pour les différents exemples de réalisation et leurs variantes, le fond chauffant 12 ; 112 ; 312 et/ou la partie annulaire 11 ; 111 ; 311 et/ou la paroi latérale annulaire 20 ; 26 ; 120 ; 320 de récipient ne présente(nt) pas nécessairement une géométrie circulaire.

A titre de variante complémentaire pour les différents exemples de réalisation, la plaque 50 ; 150 ou la cuve 350 ne sont pas nécessairement réalisées en acier inoxydable, mais peuvent notamment être réalisées en verre.

A titre de variante complémentaire pour le premier ou le deuxième exemple de réalisation, la plaque 50 ; 150 peut présenter une périphérie ajourée et/ou découpée, pour faciliter la liaison avec la partie annulaire 11 ; 111.

A titre de variante complémentaire pour les différents exemples de réalisation la puissance du fond chauffant 12 ; 112 ; 312 peut être adaptée aux utilisations envisagées, avec par exemple une puissance de chauffe de l'ordre de 500 W à 1200 W pour un appareil électroménager de préparation d'aliments de type robot de préparation culinaire comportant un outil de travail rotatif, et jusqu'à 3000 W pour un appareil électroménager de préparation de boissons de type bouilloire usuellement dépourvu d'outil de travail rotatif. Si désiré le fond chauffant 12 ; 112 ; 312 peut comporter plusieurs niveaux de puissance.

A titre de variante complémentaire pour les différents exemples de réalisation, les différents moyens de réception d'un outil de travail rotatif peuvent être combinés indifféremment avec les différents moyens d'assemblage entre embase et paroi latérale de récipient.

A titre de variante complémentaire pour les différents exemples de réalisation et leurs variantes, le récipient chauffant d'un appareil électroménager de préparation d'aliments et/ou de boissons selon l'invention peut être dépourvu de moyens de réception d'un outil de travail rotatif. L'appareil électroménager de préparation d'aliments et/ou de boissons selon l'invention peut alors si désiré être dépourvu de boîtier comportant des moyens d'entraînement d'un outil de travail rotatif.

A titre de variante complémentaire pour le premier ou le deuxième exemple de réalisation, la paroi latérale annulaire 20 ; 26 ; 120 de récipient n'est pas nécessairement montée à l'intérieur de la partie annulaire 11 ; 111.

A titre de variante complémentaire pour le premier exemple de réalisation, le passage central 59 et le noyau central 64 ne sont pas nécessairement agencés au centre géométrique du fond chauffant 12, mais dans la partie centrale du fond chauffant 12.

A titre de variante complémentaire pour le premier exemple de réalisation, le noyau central 64 peut si désiré être relié à la partie annulaire 11, par exemple au moyen d'un ou plusieurs bras.

A titre de variante complémentaire pour les différents exemples de réalisation, la partie annulaire 11 ; 111 ; 311 peut notamment présenter un habillage extérieur métallique.

A titre de variante complémentaire pour les différents exemples de réalisation, le récipient chauffant 3; 37 ; 103 ; 303 peut comporter si désiré plusieurs connecteurs 9 ; 109 ; 309.

La présente invention n'est nullement limitée aux exemples de réalisation décrits et à leurs variantes, mais englobe de nombreuses modifications dans le cadre des revendications.

## Revendications

1. Récipient chauffant (3 ; 37 ; 103 ; 303) d'un appareil électroménager de préparation d'aliments et/ou de boissons, comportant une paroi latérale annulaire (20 ; 26 ; 120 ; 320) de récipient et un fond chauffant (12 ; 112 ; 312) à élément chauffant sérigraphié (52 ; 152 ; 352), ainsi qu'une partie annulaire (11 ; 111 ; 311) entourant le fond chauffant (12 ; 112 ; 312), ladite partie annulaire (11 ; 111 ; 311) étant assemblée avec le fond chauffant (12 ; 112 ; 312), une épaisseur de matériau polymère (65 ; 165 ; 365) reliant la partie annulaire (11 ; 111 ; 311) au fond chauffant (12 ; 112 ; 312) en assurant une liaison mécanique entre la partie annulaire (11 ; 111 ; 311) et le fond chauffant (12 ; 112 ; 312), ladite épaisseur de matériau polymère (65 ; 165 ; 365) recouvrant l'élément chauffant sérigraphié (52 ; 152 ; 352), **caractérisé en ce que** la partie annulaire (11 ; 111 ; 311) forme une paroi annulaire inférieure (15 ; 115 ; 315) s'étendant en dessous du fond chauffant (12 ; 112 ; 312).

2. Récipient chauffant (3 ; 37 ; 103 ; 303) d'un appareil électroménager de préparation d'aliments et/ou de boissons selon la revendication 1, **caractérisé en ce que** ladite épaisseur de matériau polymère (65 ; 165 ; 365) enserre la partie inférieure d'un connecteur (9 ; 109 ; 309) présentant des plots reliés à l'élément chauffant sérigraphié (52 ; 152 ; 352).

3. Récipient chauffant (3 ; 37 ; 103 ; 303) d'un appareil électroménager de préparation d'aliments et/ou de boissons selon l'une des revendications 1 ou 2, **caractérisé en ce que** la partie annulaire (11 ; 111 ; 311) s'étend en dessous du fond chauffant (12 ; 112 ; 312).

4. Récipient chauffant (3 ; 37 ; 103 ; 303) d'un appareil électroménager de préparation d'aliments et/ou de boissons selon l'une des revendications 1 à 3, **caractérisé en ce que** ladite épaisseur de matériau polymère (65 ; 165 ; 365) est supérieure à 0,5 mm.

5. Récipient chauffant (3 ; 37 ; 103 ; 303) d'un appareil électroménager de préparation d'aliments et/ou de boissons selon l'une des revendications 1 à 4, **caractérisé en ce que** ledit matériau polymère (65 ; 165 ; 365) est prévu pour supporter en continu une température supérieure à 130°C.

6. Récipient chauffant (3 ; 37 ; 103 ; 303) d'un appareil électroménager de préparation d'aliments et/ou de boissons selon l'une des revendications 1 à 5, **caractérisé en ce que** ledit matériau polymère (65 ; 165 ; 365) comporte de la résine époxy.

7. Récipient chauffant (3 ; 37 ; 103 ; 303) d'un appareil électroménager de préparation d'aliments et/ou de boissons selon l'une des revendications 1 à 6, **caractérisé en ce que** ledit matériau polymère (65 ; 165 ; 365) est à base de résine polyuréthanne.

8. Récipient chauffant (3 ; 37 ; 103 ; 303) d'un appareil électroménager de préparation d'aliments et/ou de boissons selon l'une des revendications 1 à 7, **caractérisé en ce que** la partie annulaire (11 ; 111 ; 311) forme une paroi annulaire supérieure (14 ; 114 ; 314) entourant la paroi latérale annulaire (20 ; 26 ; 120 ; 320) de récipient.

9. Récipient chauffant (3 ; 37 ; 103) d'un appareil électroménager de préparation d'aliments et/ou de boissons selon l'une des revendications 1 à 8, **caractérisé en ce que** la partie annulaire (11 ; 111) relie le fond chauffant (12 ; 112) à la paroi latérale annulaire (20 ; 26 ; 120) de récipient.

10. Récipient chauffant (3; 37; 103) d'un appareil électroménager de préparation d'aliments et/ou de boissons selon la revendication 9, **caractérisé en ce que** la partie annulaire (11 ; 111) comporte une pièce surmoulée autour du fond chauffant (12 ; 112).

11. Récipient chauffant (3; 37; 103) d'un appareil électroménager de préparation d'aliments et/ou de boissons selon l'une des revendications 9 ou 10, **caractérisé en ce que** le fond chauffant (12 ; 112) comporte une plaque (50 ; 150) portant l'élément chauffant sérigraphié (52 ; 152).

12. Récipient chauffant (303) d'un appareil électroménager de préparation d'aliments et/ou de boissons selon l'une des revendications 1 à 8, **caractérisé en ce que** le fond chauffant (312) et la paroi latérale annulaire (320) de récipient appartiennent à une cuve (323).

13. Récipient chauffant (3 ; 37 ; 103 ; 303) d'un appareil électroménager de préparation d'aliments et/ou de boissons selon l'une des revendications 1 à 12, **caractérisé en ce que** le fond chauffant (12 ; 112 ; 312) présente des moyens de réception (18 ; 118 ; 318) d'un outil de travail rotatif (6 ; 106).

14. Récipient chauffant (3 ; 37) d'un appareil électroménager de préparation d'aliments et/ou de boissons selon la revendication 13, **caractérisé en ce que** lesdits moyens de réception (18) comportent un élément d'entraînement (19).

15. Récipient chauffant (3 ; 37) d'un appareil électroménager de préparation d'aliments et/ou de boissons selon la revendication 14, **caractérisé en ce que** l'épaisseur de matériau polymère (65) enserre la partie inférieure d'un noyau central (64) logeant au moins partiellement l'élément d'entraînement (19).

16. Récipient chauffant (103 ; 303) d'un appareil électroménager de préparation d'aliments et/ou de boissons selon la revendication 13, **caractérisé en ce que** lesdits moyens de réception (118 ; 318) comportent un organe de guidage (119 ; 319).

17. Appareil électroménager de préparation d'aliments et/ou de boissons comprenant un récipient chauffant (3 ; 37 ; 103 ; 303), **caractérisé en ce que** le récipient chauffant (3 ; 37 ; 103 ; 303) est conforme à l'une des revendications 1 à 16.

18. Appareil électroménager de préparation d'aliments et/ou de boissons selon la revendication 17, comportant un récipient chauffant (3 ; 37 ; 103 ; 303) selon l'une des revendications 13 à 15, **caractérisé en ce qu'**il comprend un outil de travail rotatif (6 ; 106) disposé dans ledit récipient chauffant (3 ; 37 ; 103 ; 303), et un boîtier (7 ; 107) comportant des moyens d'entraînement de l'outil de travail rotatif (6 ; 106).

## Claims

1. A heating container (3; 37; 103; 303) for a domestic appliance for preparing food and/or beverages, comprising a container annular side wall (20; 26; 120; 320) and a heating bottom (12; 112; 312) with a screen-printed heating member (52; 152; 352), as well as an annular portion (11; 111; 311) surrounding the heating bottom (12; 112; 312), said annular portion (11; 111; 311) being assembled with the heating bottom (12; 112; 312), a layer of polymer material (65; 165; 365) connecting the annular portion (11; 111; 311) with the heating bottom (12; 112; 312) by providing a mechanical link between the annular portion (11; 111; 311) and the heating bottom (12; 112; 312), said layer of polymer material (65; 165; 365) covering the screen-printed heating member (52; 152; 352), **characterised in that** the annular portion (11; 111; 311) forms a lower annular wall (15; 115; 315) extending below the heating bottom (12; 112; 312).

2. A heating container (3; 37; 103; 303) for a domestic appliance for preparing food and/or beverages according to claim 1, **characterised in that** said layer of polymer material (65; 165; 365) clasps the lower part of a connector (9; 109; 309) that has pads connected to the screen-printed heating member (52; 152; 352).

3. A heating container (3; 37; 103; 303) for a domestic appliance for preparing food and/or beverages according to one of claims 1 or 2, **characterised in that** the annular portion (11; 111; 311) extends below the heating bottom (12; 112; 312).

4. A heating container (3; 37; 103; 303) for a domestic appliance for preparing food and/or beverages according to one of claims 1 to 3, **characterised in that** said layer of polymer material (65; 165; 365) is more than 0.5 mm thick.

5. A heating container (3; 37; 103; 303) for a domestic appliance for preparing food and/or beverages according to one of claims 1 to 4, **characterised in that** said polymer material (65; 165; 365) is designed to withstand temperatures above 130°C continuously.

6. A heating container (3; 37; 103; 303) for a domestic appliance for preparing food and/or beverages according to one of claims 1 to 5, **characterised in that** said polymer material (65; 165; 365) contains epoxy resin.

7. A heating container (3; 37; 103; 303) for a domestic appliance for preparing food and/or beverages according to one of claims 1 to 6, **characterised in that** said polymer material (65; 165; 365) is made of polyurethane resin.

8. A heating container (3; 37; 103; 303) for a domestic appliance for preparing food and/or beverages according to one of claims 1 to 7, **characterised in that** the annular portion (11; 111; 311) forms an upper annular wall (14; 114; 314) surrounding the container's annular side wall (20; 26; 120; 320).

9. A heating container (3; 37; 103) for a domestic appliance for preparing food and/or beverages according to one of claims 1 to 8, **characterised in that** the annular portion (11; 111) connects the heating bottom (12; 112) with the container's annular side wall (20; 26; 120).

10. A heating container (3; 37; 103) for a domestic appliance for preparing food and/or beverages according to claim 9, **characterised in that** the annular portion (11; 111) comprises an over-moulded part around the heating bottom (12; 112).

11. A heating container (3; 37; 103) for a domestic appliance for preparing food and/or beverages according to one of claims 9 or 10, **characterised in that** the heating bottom (12; 112) comprises a plate (50; 150) carrying the screen-printed heating member (52; 152).

12. A heating container (303) for a domestic appliance for preparing food and/or beverages according to one of claims 1 to 8, **characterised in that** the heating bottom (312) and the container's annular side wall (320) belong to a vessel (323).

13. A heating container (3; 37; 103; 303) for a domestic appliance for preparing food and/or beverages according to one of claims 1 to 12, **characterised in that** the heating bottom (12; 112; 312) has means for receiving (18; 118; 318) a rotary working tool (6; 106).

14. A heating container (3; 37) for a domestic appliance for preparing food and/or beverages according to claim 13, **characterised in that** said receiving means (18) comprises a driving member (19).

15. A heating container (3; 37) for a domestic appliance for preparing food and/or beverages according to claim 14, **characterised in that** the layer of polymer material (65) clasps the lower part of a central core (64) at least partially housing the driving member (19).

16. A heating container (103; 303) for a domestic appliance for preparing food and/or beverages according to claim 13, **characterised in that** said receiving means (118; 318) comprises a guiding member (119; 319).

17. A domestic appliance for preparing food and/or beverage comprising a heating container (3; 37; 103; 303), **characterised in that** the heating container (3; 37; 103; 303) conforms to one of claims 1 to 16.

18. A domestic appliance for preparing food and/or beverage according to claim 17, comprising a heating container (3; 37; 103; 303) according to one of claims 13 to 15, **characterised in that** it comprises a rotary working tool (6; 106) arranged inside said heating container (3; 37; 103; 303), and a housing (7; 107) comprising means for driving the rotary working tool (6; 106).

## Patentansprüche

1. Heizbehälter (3; 37; 103; 303) eines Elektrohaushaltsgerätes für die Zubereitung von Lebensmitteln und/oder Getränken, umfassend eine ringförmige Behälterseitenwand (20; 26; 120; 320) und einen Heizboden (12; 112; 312) mit Siebdruck-Heizelement (52; 152; 352), sowie einen ringförmigen Teil (11; 111; 311), der den Heizboden (12; 112; 312) umgibt, wobei der ringförmige Teil (11; 111; 311) mit dem Heizboden (12; 112; 312) zusammengefügt ist, wobei eine Schicht aus Polymermaterial (65; 165; 365) den ringförmigen Teil (11; 111; 311) mit dem Heizboden (12; 112; 312) verbindet, indem sie eine mechanische Verbindung zwischen dem ringförmigen Teil (11; 111; 311) und dem Heizboden (12; 112; 312) sicherstellt, wobei die Schicht aus Polymermaterial (65; 165; 365) das Siebdruck-Heizelement (52; 152; 352) bedeckt, **dadurch gekennzeichnet, dass** der ringförmige Teil (11; 111; 311) eine untere ringförmige Wand (15; 115; 315) bildet, die sich unterhalb des Heizbodens (12; 112; 312) erstreckt.

2. Heizbehälter (3; 37; 103; 303) eines Elektrohaushaltsgerätes für die Zubereitung von Lebensmitteln und/oder Getränken nach Anspruch 1, **dadurch gekennzeichnet, dass** die Schicht aus Polymermaterial (65; 165; 365) den unteren Teil eines Anschlusses (9; 109; 309) umschließt, der Kontakte aufweist, die mit dem Siebdruck-Heizelement (52; 152; 352) verbunden sind.

3. Heizbehälter (3; 37; 103; 303) eines Elektrohaushaltsgerätes für die Zubereitung von Lebensmitteln und/oder Getränken nach einem der Ansprüche 1 oder 2, **dadurch gekennzeichnet, dass** sich der ringförmige Teil (11; 111; 311) unterhalb des Heizbodens (12; 112; 312) erstreckt.

4. Heizbehälter (3; 37; 103; 303) eines Elektrohaushaltsgerätes für die Zubereitung von Lebensmitteln und/oder Getränken nach einem der Ansprüche 1 bis 3, **dadurch gekennzeichnet, dass** die Schicht aus Polymermaterial (65; 165; 365) dicker als 0,5 mm ist.

5. Heizbehälter (3; 37; 103; 303) eines Elektrohaushaltsgerätes für die Zubereitung von Lebensmitteln und/oder Getränken nach einem der Ansprüche 1 bis 4, **dadurch gekennzeichnet, dass** das Polymermaterial (65; 165; 365) ausgelegt ist, um durchgehend eine Temperatur von mehr als 130°C zu ertragen.

6. Heizbehälter (3; 37; 103; 303) eines Elektrohaushaltsgerätes für die Zubereitung von Lebensmitteln und/oder Getränken nach einem der Ansprüche 1 bis 5, **dadurch gekennzeichnet, dass** das Polymermaterial (65; 165; 365) Epoxidharz enthält.

7. Heizbehälter (3; 37; 103; 303) eines Elektrohaushaltsgerätes für die Zubereitung von Lebensmitteln und/oder Getränken nach einem der Ansprüche 1 bis 6, **dadurch gekennzeichnet, dass** das Polymermaterial (65; 165; 365) auf Basis von Polyurethanharz hergestellt ist.

8. Heizbehälter (3; 37; 103; 303) eines Elektrohaushaltsgerätes für die Zubereitung von Lebensmitteln und/oder Getränken nach einem der Ansprüche 1 oder 7, **dadurch gekennzeichnet, dass** der ringförmige Teil (11; 111; 311) eine obere ringförmige Wand (14; 114; 314) bildet, die die ringförmige Behälterseitenwand (20; 26; 120; 320) umgibt.

9. Heizbehälter (3; 37; 103) eines Elektrohaushaltsgerätes für die Zubereitung von Lebensmitteln und/oder Getränken nach einem der Ansprüche 1 oder 8, **dadurch gekennzeichnet, dass** der ringförmige Teil (11; 111) den Heizboden (12; 112) mit der ringförmigen Behälterseitenwand (20; 26; 120) verbindet.

10. Heizbehälter (3; 37; 103) eines Elektrohaushaltsgerätes für die Zubereitung von Lebensmitteln und/oder Getränken nach Anspruch 9, **dadurch gekennzeichnet, dass** der ringförmige Teil (11; 111) ein Stück umfasst, das um den Heizboden (12; 112) herumgeformt ist.

11. Heizbehälter (3; 37; 103) eines Elektrohaushaltsgerätes für die Zubereitung von Lebensmitteln und/oder Getränken nach einem der Ansprüche 9 oder 10, **dadurch gekennzeichnet, dass** der Heizboden (12; 112) eine Platte (50; 150) umfasst, die das Siebdruck-Heizelement (52; 152) trägt.

12. Heizbehälter (303) eines Elektrohaushaltsgerätes für die Zubereitung von Lebensmitteln und/oder Getränken nach einem der Ansprüche 1 bis 8, **dadurch gekennzeichnet, dass** der Heizboden (312) und die ringförmige Behälterseitenwand (320) einem Gefäß (323) angehören.

13. Heizbehälter (3; 37; 103; 303) eines Elektrohaushaltsgerätes für die Zubereitung von Lebensmitteln und/oder Getränken nach einem der Ansprüche 1 bis 12, **dadurch gekennzeichnet, dass** der Heizboden (12; 112; 312) Mittel zur Aufnahme (18; 118; 318) eines drehenden Arbeitswerkzeuges (6; 106) aufweist.

14. Heizbehälter (3; 37) eines Elektrohaushaltsgerätes für die Zubereitung von Lebensmitteln und/oder Getränken nach Anspruch 13, **dadurch gekennzeichnet, dass** die Aufnahmemittel (18) ein Antriebselement (19) umfassen.

15. Heizbehälter (3; 37) eines Elektrohaushaltsgerätes für die Zubereitung von Lebensmitteln und/oder Getränken nach Anspruch 14, **dadurch gekennzeichnet, dass** die Schicht aus Polymermaterial (65) den unteren Teil eines Mittelkerns (64) umschließt, in dem zumindest teilweise das Antriebselement (19) untergebracht ist.

16. Heizbehälter (103; 303) eines Elektrohaushaltsgerätes für die Zubereitung von Lebensmitteln und/oder Getränken nach Anspruch 13, **dadurch gekennzeichnet, dass** die Aufnahmemittel (118; 318) ein Führungselement (119; 319) umfassen.

17. Elektrohaushaltsgerät für die Zubereitung von Lebensmitteln und/oder Getränken, umfassend einen Heizbehälter (3; 37; 103; 303), **dadurch gekennzeichnet, dass** der Heizbehälter (3; 37; 103; 303) einem der Ansprüche 1 bis 16 entspricht.

18. Elektrohaushaltsgerät für die Zubereitung von Lebensmitteln und/oder Getränken nach Anspruch 17, umfassend einen Heizbehälter (3; 37; 103; 303) nach einem der Ansprüche 13 bis 15, **dadurch gekennzeichnet, dass** es ein drehendes Arbeitswerkzeug (6; 106), das im Heizbehälter (3; 37; 103; 303) angeordnet ist, und ein Gehäuse (7; 107) umfasst, das Antriebsmittel für das drehende Arbeitswerkzeug (6; 106) umfasst.
